# EUROPÄISCHE PATENTSCHRIFT

(11) **EP 0 558 991 B1**
(45) Veröffentlichungstag und Bekanntmachung des Hinweises auf die Patenterteilung: **07.01.1999**
(21) Anmeldenummer: 93102390.7
(22) Anmeldetag: 16.02.1993
(51) Int. Cl.: G02B 5/08, G02B 7/182

(54) **Verfahren zur Herstellung von Reflektoren**
Method for manufacturing reflectors
Procédé pour la fabrication de réflecteurs

(30) Priorität: 05.03.1992 DE 4207009; 23.06.1992 DE 4220472
(43) Veröffentlichungstag der Anmeldung: 08.09.1993
(73) Patentinhaber: INDUSTRIEANLAGEN-BETRIEBSGESELLSCHAFT M.B.H., 85521 Ottobrunn (DE); Daimler-Benz Aerospace Aktiengesellschaft, 81663 München (DE)
(72) Erfinder: Goedtke, Peter, W-8000 München 80 (DE); Blenninger, Ernst, W-8000 München 83 (DE); Papenburg, Ulrich, W-8923 Lechbruck (DE)
(74) Vertreter: Bohnenberger, Johannes, Dr.

(56) Entgegenhaltungen:
- DE-A- 3 612 325
- US-A- 4 444 467
- APPLIED PHYSICS LETTERS. Bd. 54, Nr. 25, 19. Juni 1989, NEW YORK US Seiten 2512 - 2514 GOELA ET AL 'Rapid Fabrication of Lightweight Ceramic Mirrors via Chemical Vapour Deposition'

## Beschreibung

Die Erfindung betrifft ein Verfahren zur Herstellung von Reflektoren, Spiegeln oder dergleichen Körpern zur Reflexion elektromagnetischer Wellen, entsprechende Reflektoren sowie deren Verwendung.

Ein großer Teil der optischen Werkstoffe dient der geordneten Weiterleitung von Strahlen durch Brechung oder Reflexion, wobei auch beide Eigenschaften gleichzeitig ausgenützt werden können. Durch Brechung wirkende Materialien werden vor allem durch die Abhängigkeit ihrer Brechzahl und ihres Transmissionsgrades von der Wellenlänge gekennzeichnet.

Bei Spiegeln und Reflektoren interessiert der Reflexionsgrad als Funktion der Wellenlänge. Bei nicht zu dünnen Metallschichten wird der nicht reflektierte Strahlungsanteil absorbiert. Bei den nahezu absorptionsfrei herstellbaren dielektrischen Spiegeln ist die Widerstandsfähigkeit gegen atmosphärische Einflüsse und ihre Erhöhung durch Schutzschichten wesentlich.

Während im sichtbaren Spektralbereich eine große Anzahl hochtransparenter Gläser zur Verfügung steht, ist dies im UV- und IR-Bereich nicht mehr der Fall. Hier werden die Gläser durch eine kleine Anzahl von Kristallen und davon abgeleiteten Werkstoffen ergänzt, deren wichtigste Eigenschaft ein hoher Transmissionsgrad ist. Einige dieser Materialien (z.B. BaF₂, CaF₂, LiF, Al₂O₃, SiO₂) sind für Breitband- und Multispektralsysteme geeignet, weil ihre Durchlässigkeit vom UV bis zum IR reicht. Bei einigen dieser Stoffe stört die hohe Wasserlöslichkeit, so daß man Schutzschichten vorsehen und/oder die Spiegel nur in völlig getrockneter Luft verwenden kann.

Einkristalle (je nach Kristallart isotrop oder anisotrop) werden aus natürlichen Fundstücken oder durch Kristallzüchtung (Ziehen aus der Schmelze) gewonnen. Polykristallines Material (isotrop) wird durch Drucksintern hergestellt.

Für die meisten Anwendungen kommen nur isotrope Materialien in Frage. Anisotrope Kristalle werden in der Polarisationsoptik verwendet.

Der Halbleiter Silicium mit isotropem Charkter wirkt als Langpaßfilter mit steiler Kante und sperrt somit den sichtbaren und den nahen IR-Bereich. Polykristallines Silicium hat im Anwendungsbereich bei 2 mm Dicke (ohne Reflexminderung) einen Transmissionsgrad τ ∼ 0,53. Nach einem Transmissionsminimum bei etwa 16 µm liegt der Transmissionsgrad im langwelligen Bereich bis über 300 µm wieder bei 0,4 bis 0,5 und macht, trotz seiner Sprödigkeit, in Kombination mit seinen günstigen thermischen Eigenschaften Anwendungen vor allem in der Infrarotoptik und als Spiegelträger möglich. (Quelle 1: Naumann/Schröder: Bauelemente der Optik, 5. Auflage, Seite 64, Hanser Verlag).

Oberflächenspiegel ergeben durch achromatische Abbildung und Vermeidung anderer mit dem Durchgang durch brechende Materialien verbundene Fehler viele Vorteile vor refraktiven Systemen. Da jedoch die Änderung eines Strahl-Ablenkungswinkels doppelt so groß wie die Änderung des Einfallwinkels ist, werden bei gleichen optischen Anforderungen an Formgenauigkeit und Mikrogestalt der Spiegelflächen höhere Ansprüche gestellt als bei brechenden Grenzflächen. Eine weitere Eigenschaft des Spiegels ist der Verlauf des spektralen Reflexionsgrades. Von der Möglichkeit, die Oberfläche eines massiven Metallkörpers durch gute Politur unmittelbar als Spiegel einzusetzen, macht man heute nur in Ausnahmefällen Gebrauch. Im allgemeinen wird eine Spiegelschicht auf einem Spiegelträger beschichtet. Der metallische Spiegelträger wird vorher poliert und ist für die Formgenauigkeit der Fläche verantwortlich. Auf den Träger wird die Spiegelschicht durch (meist) Aufdampfen im Hochvakuum oder chemische Verfahren aufgebracht. Die Spiegelschicht paßt sich hier völlig der Form der Trägerfläche an und bestimmt den Verlauf der spektralen Reflexionsfunktion und (ggf. zusammen mit Schutzschichten) die zeitliche Stabilität der Reflexionsfunktion. Für Spiegelschichten werden bevorzugt Metalle wie z.B. Aluminium, Chrom, Nickel, Quecksilber, Silber, Gold, Platin, Rhodium, aber auch Siliciummonoxid (SiO) und Siliciumdioxid (SiO₂) eingesetzt (Quelle 1).

An Material für Spiegelträger und Reflektoren werden hohe Anforderungen bezüglich mechanischer und thermischer Stabilität gestellt. Große Spiegel verformen sich bei unterschiedlicher Lage bereits durch ihr Eigengewicht; Verschiebungen um Bruchteile von λ müssen verhindert bzw. durch Gegenkräfte kompensiert werden. Temperaturänderungen und ungleichmäßige Temperaturverteilungen führen zu inneren Spannungen und Verformungen. Wesentliche Anforderungen an ein Trägermaterial für Präzisionsspiegel sind deshalb ein hoher Elastizitätsmodul E und ein sehr niedriger thermischer Ausdehnungskoeffizient α. Weiterhin wird gute Polierbarkeit gefordert, damit optimal glatte Flächen mit geringem Streulichtanteil erzielt werden.

In dieser Hinsicht sind die meisten Metallflächen ungünstig, weil ihre Gefügestruktur wegen abweichender Eigenschaften an den Korngrenzen zu Flächenabweichungen nach dem Polieren führen kann. Es werden aber u.a. Reinkupfer, Aluminium- und Molybdänlegierungen sowie druckgesintertes Beryllium als Spiegel benutzt, wobei die Polierbarkeit durch eine Schicht von chemisch abgeschiedenem Nickelphosphid verbessert werden muß. Metallspiegel haben eine hohe Wärmeausdehnung, können aber wegen ihrer günstigen Wärmeleitfähigkeit nur begrenzt z.B. für Hochleistungslaser eingesetzt werden. Größere Bedeutung haben zur Zeit Glas und Glaskeramiken.

Bestimmte Bauteile, insbesondere für die Raumfahrt, sollen sich neben einer hohen Grundfestigkeit und Temperturbeständigkeit auch durch ein niedriges Raumgewicht auszeichnen. Darüber hinaus wird eine gute Temperaturwechselbeständigkeit (TWB), verbunden mit einem niedrigen Wärmeausdehnungskoeffizienten (WAK), gefordert.

Beispielsweise sollen zukünftige Satelliten mit einer im Einsatz rotierenden Spiegelstruktur ausgestattet werden. Derartig große Spiegel mit Abmessungen von beispielsweise 800 x 600 mm müssen an einer Stirnseite eine optisch reflektierende Oberfläche aufweisen.

Da im Weltraum-Einsatz mit zyklischen Temperaturwechseln von 0 bis 700 K zu rechnen ist, müssen neben der größenbedingten Bauteilsteifigkeit die Temperatur- und Thermoschockbeständigkeit, niedriges Raumgewicht und nicht zuletzt geringe thermische Ausdehnung gewährleistet werden. Darüber hinaus müssen sich an den in Frage kommenden Werkstoffgruppen hohe Oberflächengüten für reflektierende Optiken erzielen lassen.

Konventionelle Spiegelbauteile werden heute aus einer Glaskeramik gefertigt. Der Herstellungsprozeß erfolgt über das Schmelzen verschiedener Oxidpulver wie z.B. LiO₂, Al₂O₃, MgO, ZnO und P²O⁵ in Platinöfen. Nach der Homogenisierung der Schmelze werden über die Preß-, Gieß- und andere Glasformgebungsverfahren entsprechende Glasformkörper hergestellt. Nach einer Sturzkühlung und dem Entformen erfolgt eine kontrollierte Temperung der Glas-Bauteile auf Temperaturen von ca. 700°C, wobei sich im nichtkristallinen (amorphen) Glas sogenannte Kristallkeime ausbilden. Bei entsprechender Haltezeit führt die angesprochene Keimbildung zum Kristallwachstum und vollzieht die "Keramisierung" des Glases zur Glaskeramik.

Diese kristalline Glaskeramik besitzt die vorteilhafte Eigenschaft, in einem Temperaturbereich von 273 K bis 323 K eine niedrige thermische Ausdehnung von nur 0 ± 0,15 x 10⁻⁶ K⁻¹ aufzuweisen.

Als Spiegelwerkstoff ist diese Glaskeramik nur begrenzt einsetzbar, da sie nur über aufwendige Formgebungsverfahren hergestellt werden kann und außerdem ein relativ hohes Raumgewicht von 2,53 g/cm³, eine geringe Zugfestigkeit und nicht zuletzt ein sprödes Bruchverhalten aufweist. Außerdem ist ihr Einsatzbereich als optische Komponente auf eine konstante oder eine maximale Temperatur von 423 K begrenzt, da die kristalline Struktur von derartigen Glaskeramiken im Temperaturbereich von 200 bis 300 K sowie 360 bis 480 K einer Spannungshysterese unterliegen. Im Temperaturbereich größer 700 K wird das Gefüge bereits irreversibel geschädigt (Quelle 2: SiRA; ESTEC-Contract Nr. 5976/84/NL/PR; Oktober 1985).

Ferner sind Versuche bekannt, Leichtbau-Spiegelbauteile aus preisgünstigem Aluminium (Raumgewicht 2,71 g/cm³) herzustellen. Aufgrund der geringen Steifigkeit des Aluminiums ist es bisher jedoch nicht möglich, daraus Präzisionsoptiken zu fertigen. Für den Einsatz in korrosiver Umgebung müssen Aluminiumspiegel mit einer dicken (0,2 - 0,5 mm) Nickelbeschichtung versehen werden. Aufgrund massiver Wärmeausdehnungsunterschiede zwischen Aluminium (23·10⁻⁶K⁻¹) und Nickel (13·10⁻⁶K⁻¹) dürfen diese Spiegel keinerlei Temperaturwechselbeanspruchungen ausgesetzt werden, da sonst thermisch induzierte Risse entstehen.

Spiegel aus reinem Aluminium, wie sie im Vakuum eingesetzt werden können, zeigen schon bei geringer Temperaturbeanspruchung - aufgrund des sehr hohen Wärmeausdehnungskoeffizienten auf den optischen Spiegelflächen - lokale Verformungen, die im Einsatz beispielsweise als Laserspiegel zur Entfernungsmessung zu undefinierten Ergebnissen führen würden (Quelle 2).

Stand der Technik sind auch reflektierende Optiken auf Quarzglasbasis. Aufgrund ihres äußerst niedrigen Wärmeausdehnungskoeffizienten von nahezu Null im Temperaturbereich von 0 bis 273 K sind Quarzglassysteme prädestiniert für sogenannte cryogene Anwendungen. Im Bereich zwischen 273 K und 373 K steigt der thermische Ausdehnungskoeffizient auf 5,1·10⁻⁷K⁻¹. Weitere Nachteile sind das relativ hohe Raumgewicht von 2,2 g/cm³, die geringe Steifigkeit, die niedrige Zugfestigkeit von < 50 MPa, hohe Produktionskosten und die Begrenzung des Durchmessers auf rd. 500 mm wegen des komplexen Herstellungsverfahrens (Quelle: W. Englisch, R. Takke, SPIE, vol. 1113, Reflective Optics II, 1989, page 190-194).

Aufgrund seiner mechanischen und thermischen Eigenschaften sowie des niedrigen Raumgewichts von nur 1,85 g/cm³ eignet sich Beryllium besonders zur Herstellung von Leichtbau-Spiegelstrukturen. Zum Beipiel besitzt Beryllium eine fünfmal höhere Steifigkeit als Aluminium oder Glaswerkstoffe. Beschichtete Berylliumplatten lassen sich auf Rauhtiefen von kleiner 15 Angström (Rₐ) polieren und sind damit prädestiniert für optisch reflektierende Oberflächen.

Besonders nachteilig ist, neben den hohen Rohstoff- und Herstellungskosten, das generell toxische Verhalten von Beryllium-Werkstoffen. Um sie als optische Komponenten unter atmosphärischen Bedingungen einsetzen zu können, müssen diese zuvor mit Nickel beschichtet werden. Aufgrund unterschiedlicher Wärmeausdehnungskoeffizienten von Beryllium (11,2 10⁻⁶K⁻¹) und Nickel (15 10⁻⁶K⁻¹) dürfen diese Komponenten keinesfalls auf Thermoschock beansprucht werden und kommen daher nur bei konstanten Temperaturen oder in sehr engen Temperaturbereichen zum Einsatz.

Außerdem wurde festgestellt, daß die über die Vakuum-Heißpreßtechnik oder das heißisostatische Pressen hergestellten Berylliumteile einen anisotropen Werkstoff-Charakter mit unterschiedlichen Eigenschaften in unterschiedlichen Kristallrichtungen aufweisen.

Unter Weltraumbedingungen können unbeschichtete Spiegel verwendet werden. Der hohe Wärmeausdehnungskoeffizient bewirkt jedoch bei den typischen Temperaturwechseln zwischen 0 und 700 K lokale Verformungen auf der optischen Fläche, die Beryllium für den Einsatz in der Präzisionsoptik ausschließen (Quelle 1) und auch bei Satellitenspiegeln zu erheblichen Übertragungsproblemen führen können.

Derartige Spiegelstrukturen werden gegenwärtig auch aus monolithischer Keramik auf der Basis von Siliciumcarbid über die sog. Schlickerguß-Technik hergestellt. Bei diesem Formgebungsverfahren wird in eine als Negativ ausgebildete Gipsform eine Siliciumcarbid-Pulversuspension eingefüllt. In Abhängigkeit von der Verweilzeit der Suspension in den Gipsformen bildet sich ein keramischer Scherben, also der positive Bauteil-Grünkörper, mit unterschiedlicher Wandstärke aus. Nach der Trocknung der Rohlinge erfolgt ein Sinterprozeß in Vakuum- oder Schutzgasöfen bei Temperaturen von bis zu 2200°C. Neben dem aufwendigen Formenbau zur Herstellung der Grünlinge beinhaltet diese Herstellungstechnologie den Nachteil, daß nur bestimmte Geometrien und kleine Baugrößen verwirklicht werden können und die Fertigung insgesamt einer hohen Ausschußrate unterliegt. Da diese Siliciumcarbid-Formkörper bei der Trocknung und Sinterung einer Schwindung unterliegen, kann die erforderliche Maßhaltigkeit nur durch eine kostspielige Bearbeitung mit Diamantwerkzeugen gewährleistet werden. Aufgrund des heterogenen Gefüges wird der Sinterkörper anschließend zusätzlich über die chemische Gasphasenabscheidung mit Siliciumcarbid beschichtet, um Rauhtiefen von weniger als 40 Angström erreichen zu können. Neben dem aufwendigen Herstellungs- und Bearbeitungsverfahren besitzt Siliciumcarbid ein relativ hohes Raumgewicht von 3,2 g/cm³ und zeigt ein äußerst sprödes Bruchverhalten.

Aus der DE 32 46 755 Al ist bekannt, daß man hochfeste Verbundmaterialien, bestehend aus verschiedenen Laminatschichten in Kombination mit Zellkern- oder Wabenschichten, in Leichtbauweise herstellen kann. Als Rohstoffe kommen dabei kunstharzgetränkte Vliese oder Gewebe aus Papier, Kunststoff, Folie, Glasgewebe, Carbon-Faservliese oder Polyimid zum Einsatz, wobei der Zellkern oder die Wabenschicht eine bessere Stabilität und eine erhöhte Biegesteifigkeit des Formkörpers gewährleisten sollen.

Derartige Verbundmaterialien auf CFK- oder GFK-Basis (kohleoder glasfaserverstärkte Kunststoffe) sind auf Raumtemperaturanwendung beschränkt. Aufgrund des inhomogenen Faser- oder Laminataufbaus kann durch eine Oberflächenbearbeitung keine optische Spiegelfläche erzeugt werden.

Die optischen Eigenschaften von metallischem Silizium sind in "Optical Properties of Metallic Silicon", M. Hanfland et al, in Phys. Rev. B, Vol. 38, No. 18 (Dec. 1988), pp. 12864 - 12867 beschrieben.

Aus der Zeitschrift Appl. Phys. Lett. 54 (25), June 1989, Seiten 2512 - 2514 ist ein Verfahren der oben genannten Art bekannt, das allerdings reltiv aufwendig ist.

Der Erfindung liegt die Aufgabe zugrunde, ein einfaches Verfahren aufzuzeigen, mit welchem Reflektoren mit geringem Gewicht und verbesserten mechanisch-/thermischen Eigenschaften in einfacher Weise herstellbar sind.

Diese Aufgabe wird durch das Verfahren nach Anspruch 1 bzw. einen Reflektor nach Anspruch 27 gelöst. Eine besondere Verwendung ergibt sich aus Anspruch 29.

In der nachfolgenden Beschreibung wird in erster Linie davon ausgegangen, daß Kohlenstoff bzw. Kohlenstoffasern als Grundbaustein für die Formkörper verwendet werden. Es soll aber an dieser Stelle ausdrücklich darauf hingewiesen sein, daß die Entwicklung von Materialien ähnlichen feinstrukturellen Aufbaus bzw. die Verwendung derartiger Stoffe vom Erfindungsgedanken mit umfaßt ist. Ein wesentlicher Gedanke der vorliegenden Erfindung liegt nämlich darain, daß diese "durchtränkt" werden, so daß sich die Silicium-Reflektorschicht mit dem Grundkörper fest verbinden kann.

Weiterhin sei darauf hingewiesen, daß in der nachfolgenden Beschreibung im allgemeinen von Silicium-Formkörpern oder -Wafern zur Herstellung der Außenschicht gesprochen wird. Es ist aber auch möglich, metallisches Silicium in körniger Form oder pulverförmig zu verwenden, wobei dann eine mechanische Nachbehandlung (schleifen, polieren) erforderlich wird. Besonders einfach gestaltet sich das Verfahren jedoch bei der Verwendung von Wafern, die ohnehin hinreichend spiegelnde Oberflächen aufweisen.

CFC-Verbundwerkstoffe, welche aus einer Kohlenstoffmatrix und Verstärkungsfasern aus Kohlenstoff bestehen, werden über das Harz-Imprägnier- und Carbonisierungsverfahren industriell gefertigt. Diese entstandenen Werkstoffe zeichnen sich durch eine äußerst günstige Kombination von Werkstoffeigenschaften aus, wie z.B. hohe mechanische Festigkeit im Raum- und Hochtemperaturbereich in Verbindung mit niedrigem Raumgewicht (1,0 - 1,7 g/cm³) und geringe Sprödigkeit.

Die ausgezeichneten Materialeigenschaften von CFC werden dadurch getrübt, daß dieser Werkstoff eine geringe Oxidationsbeständigkeit besitzt und nur sehr begrenzt in sauerstoffhaltiger Atmosphäre eingesetzt werden kann. Die geringe Resistenz gegenüber Sauerstoff beschränkt CFC zur Zeit auf den Vakuum- und Schutzgaseinsatz, da sonst bei Temperaturen oberhalb von 400°C ein Abbrand einsetzt.

Um die Oxidationsbeständigkeit dieser Verbundwerkstoffe zu erhöhen, wurden die sog. Ceramic Matrix Composites (CMC) entwickelt. Bei diesen Werkstoffen werden in die poröse CFC-Matrix refraktäre und keramische Komponenten infiltriert. Es ist auch die Herstellung von Kurzfaser-Formköpern möglich, wobei Kurzfasern auf Kohlenstoffbasis in einer PhenolharzSuspension gelöst sind und bei Temperatursteigerung aushärten. Bei weiterer Temperaturaufgabe werden die Harzbindemittel beider Compositequalitäten unter Ausschluß von Sauerstoff carbonisiert.

Das erfindungsgemäße Bauteil weist als Grundkörper faserverstärkte *CFC-oder CMC- oder Kohlenstoff -Waben -Composites und* oberflächlich metallisches Silicium auf. Unter metallischem Silicium ist dabei elementares Silicium zu verstehen, welches durch Diffusions-, Sinter- oder Anschmelzvorgänge von Silicium-Formkörpern oder Wafern oder Siliciumpulver auf CFC-Trägersubstraten appliziert wurde. Silicium-Wafer sind metallische Scheiben, bestehend aus Reinstsilicium. Das Silicium kann ein isotropes oder polykristallines Gefüge aufweisen.

Die Erfindung erlaubt die Herstellung von Bauteilen mit komplexer Geometrie, hoher Temperaturwechselbeständigkeit, niedrigem Raumgewicht (0,5 - 2 g/cm³) bei gleichzeitig hoher Festigkeit (> 150 MPa), geringem Wärmeausdehnungskoeffizienten (WAK) und Oberflächen, die sich für reflektierende Optiken eignen.

Ein weiterer Vorteil des erfindungsgemäßen Verfahrens liegt darin, daß-preisgünstige, handelsübliche Werkstoffe verwendet werden können, die sich auf jeder Werkzeugmaschine bearbeiten lassen.

Darüber hinaus können die Dichte und Festigkeit des Bauteils gezielt über die Auswahl der Trägerstrukturen und die Quantität bzw. Qualität der gewählten Infiltrationsprozesse eingestellt werden. Die Wärmeausdehnungskoeffizienten der erfindungsgemäß eingesetzten Werkstoffgruppen sind untereinander sehr ähnlich; somit ergeben sich sehr genaue, formstabile Teile, auch bei großen Abmessungen.

Dabei können vorteilhafterweise jegliche CFC-Rohstoffe, insbesondere auf Lang- oder Kurzfaserbasis sowie mit orientiertem oder unorientiertem Faseraufbau verwendet werden. Darüber hinaus kann das erfindungsgemäße Verfahren auch an bekannten Wabenstrukturen auf Papier, Zellstoff- oder Kohlefaserbasis angewendet werden.

Der eingesetzte CFC-Vollkörper besitzt eine Dichte von höchstens 1,4 g/cm³, d.h. er weist eine hohe Porosität auf. Abgesehen von den Poren weist der Vollkörper keine Hohlräume auf, d.h. er ist von seiner Form her ein massiver Körper, z.B. eine Platte, ein Block oder ein Vollzylinder. Bei mehrdimensional orientierten CFC-Qualitäten mit Langfaseraufbau geht man in der Regel von in Harz getränkten Kohlefasergeweben, sog. Prepregs aus, die in beheizbaren axialen Pressen zu CFK-Platten verpreßt werden.

Zur Herstellung von CFC-Vollkörpern auf Kurzfaserbasis werden in bekannter Weise Kohle- oder Graphitfasern in einem wärmehärtbaren Harzbindemittel suspendiert. Die Suspension wird in eine Form gegeben und anschließend die Lösungmittel z.B. durch Erwärmen entfernt und das Harz-Bindemittel und damit der CFC-Vollkörper ausgehärtet. Bei allen CFC-Qualitäten soll die Faserverstärkung einer Versprödung der keramisierten CFC-Werkstoffe entgegenwirken und ein quasiduktiles Bruchverhalten aufrecht erhalten. Die aus den bekannten Formgebungsverfahren hergestellten Wabenstrukturen z.B. auf Hartpapier- oder Kohlefaserbasis werden zur Erhöhung der Kohlenstoffausbeute mit einem Harzbindemittel, vorzugsweise Phenolharz, imprägniert und in einer anschließenden Wärmebehandlung ausgehärtet.

Gemeinsam ist allen CFC- oder Wabenstrukturen die anschließende Carbonisierung des Bindemittelharzes im Vakuum oder Schutzgas bei Temperaturen von beispielsweise 900 - 1300°C. Die erhaltenen CFC-Vollkörper oder Wabenstrukturen werden dann vorzugsweise in Vakuum- oder Schutzgasatmosphäre auf Temperaturen von mehr als 2000°C erhitzt, um eine zumindest teilweise Graphitierung der C-Matrix und Fasern vorzunehmen.

Durch materialabtragende Bearbeitung wird dann aus den Vollköpern der entsprechende CFC-Rohling hergestellt, der die Maße des herzustellenden Bauteils, also beispielsweise die Spiegelgrundstruktur eines Satelliten oder anderer optisch reflektierender Systeme besitzt. Die materialabtragende Bearbeitung kann beispielsweise durch Drehen, Fräsen oder Schleifen erfolgen, wobei die zur spanabhebenden Bearbeitung von metallischen Werkstoffen bekannten Maschinen eingesetzt werden können. Zur weiteren Gewichtsersparnis können vorteilhafterweise bei der Bearbeitung der CFC-Rohstoffe an der Rückseite der Spiegelstrukturen Taschen beliebiger Geometrie eingefräst, erodiert oder gebohrt werden. Die Kohlenstoff-Wabenstrukturen können nach der Carbonisierung an den Stirnseiten mit Kohlefasergeweben beliebiger Art oder Gewebeprepregs mittels eines Harzbindemittels zu einem Verbund laminiert werden. Es ist außerdem möglich, die Wabenstrukturen in das hochporöse Kurzfaser-CFC einzupressen oder die mit CFC-Geweben ummantelten Wabenstrukturen zu einem Sandwich-System, bestehend aus mehreren Wabenstrukturen, zu verpressen, um so nach der Carbonisierung einen hochtemperaturbeständigen Leichtbaukonstruktionswerkstoff mit hoher Steifigkeit und quasiduktilem Bruchverhalten zu erhalten.

Der nach der Bearbeitung erhaltene CFC- oder Wabenrohling, der wie der Vollkörper eine geringe Dichte von 0,1 - 1,3 g/cm³ und damit eine hohe Porosität von bis zu 90 Vol-% aufweist, kann anschließend erneut über die Imprägnierung von Harzbindemitteln und deren Carbonisierung weiter infiltriert und verfestigt werden.

Auch eine Infiltration über die chemische Gasphasenabscheidung (CVD) mit pyrolytischem Kohllenstoff bis zu einer Dichte von maximal 1,4 g/cm³, vorzugsweise 0,3 - 1,0 g/cm³, kann zur notwendigen Verfestigung der CFC-Rohlinge und somit Versteifung der Spiegelgrundstruktur führen. Während bei der Harzimprägnierung vorzugsweise Phenolharze zum Einsatz kommen, wird bei der chemischen Gasphasenabscheidung des Kohlenstoffs vorzugsweise ein Gemisch aus Kohlenwasserstoffen, wie Methan oder Propan, und einem inerten Gas, wie Argon oder Stickstoff, bei einer Temperatur zwischen 700 und 1100°C und einem Druck von 1 - 100 Millibar durchgeführt. Das Gas diffundiert in die offenporige Struktur, zersetzt sich in Kohlenstoff und Wasserstoff, wobei der Kohlenstoff vorzugsweise als pyrolytischer Kohlenstoff an den Faseroberflächen bzw. an den Faserkreuzungspunkten abscheidet und so eine Festigkeitssteigerung erzielt wird.

Die aus beiden Infiltrationsverfahren erhaltenen CFC-Rohlinge werden an der für die Spiegelfläche vorgesehenen Seiten oberflächlich geschliffen und in einen Vakuum- oder Schutzgasofen eingebaut. Auf die geschliffene Seite werden ein oder mehrere metallische Silicium-Formkörper aufgelegt und die Probe auf Temperaturen von 1300 - 1600°C, vorzugsweise 1350 - 1450°C aufgeheizt. Durch eine chemische Reaktion des Kohlenstoffs mit dem Silicium bildet sich an den Grenzflächen Siliciumcarbid aus, welches zu einer Verfestigung oder Fügung und damit zur Applizierung des Silicium-Wafers auf dem CFC-Trägersubstrat führt. Neben der chemischen Reaktion können auch Anschmelzvorgänge des metallischen Siliciums oder Diffusion zur Applizierung der Wafer auf dem CFC-Rohling führen und sich so optisch reflektierende Strukturen ausbilden.

Auf sog. Ceramic-Matrix-Composites (CMC), welche beispielsweise in der Matrix Siliciumcarbid und Silicium aufweisen, können metallische Silicium-Wafer bei Temperaturen von 1300 - 1600°C fest appliziert werden.

Eine besonders vorteilhafte Ausgestaltung des erfindungsgemäßen Verfahrens sieht auch vor, daß man die zu verspiegelnden Flächen mit einem oder mehreren Silicium-Formkörpern oder Si-Wafern belegt und die so vorbereiteten Spiegelträger mit ihrem unteren Ende in eine dotierte Siliciumschmelze stellt. Durch die Kapillarkräfte in der Trägerstruktur steigt das geschmolzene Silicium im Rohling bis zu den hochreinen Silicium-Formkörpern nach oben, wodurch zum einen der Rohling zum CMC veredelt wird und die aufliegenden Silicium-Formkörper oder Wafer untereinander verbunden und rückseitig fest an das Bauteil gefügt werden. Trägerstrukturen, die aus mehreren Teilelementen gesteckt oder gefügt sind, können außerdem durch das aufsteigende Silicium zu einer Gesamtstruktur verfestigt werden.

Die Infiltration des CFC-Rohlings erfolgt mit einer solchen Menge an geschmolzenem metallischem Silicium, daß seine Dichte weniger als 2,0 g/cm³, vorzugsweise 1,5 - 1,8 g/cm³ beträgt. Vorteilhafterweise sind die handelsüblichen metallischen Silicium-Einkristall-Wafer schon derart vorgeschliffen und poliert, daß sie nach der Applizierung direkt optisch reflektierende Flächen ausbilden und so spanabhebende Bearbeitungszyklen auf ein Minimum reduziert oder ausgeschlossen werden können. Um ein massives Anschmelzen, Deformieren und Abdampfen der aufliegenden Siliciumteile zu verhindern, darf eine maximale Prozeßtemperatur von 1550°C nicht überschritten werden; die Prozeßtemperatur liegt vorzugsweise zwischen 1350 und 1500°C. Eine besonders vorteilhafte Ausgestaltung des erfindungsgemäßen Verfahrens sieht auch vor, daß man die Silicium-Formkörper vor der Applizierung mit einem Kleber oder Harzbindemittel auf die CFC- oder CMC- oder Wabengrundstrukturen aufklebt und diese bei der Temperaturbehandlung entsprechende Diffusions-, Sinter- oder Anschmelzvorgänge an der Grenzfläche zwischen dem Trägersubstrat und den Silicium-Formkörpern fördern.

Als Kleber oder Harzbindemittel können vorteilhafterweise Precursoren auf Polysilan- oder Siliciumcarbonitrid-Basis und/oder Kleber auf Silicium-, Siliciumcarbid oder Kohlenstoff-Basis oder Silikone eingesetzt werden. Vor der Reaktionsapplizierung müssen die Kleber bei Temperaturen zwischen 100 und 200°C getrocknet bzw. gehärtet werden. Eine Pyrolyse der Harzbindemittel erfolgt bei 1000°C in Vakuum- oder Schutzgasatmosphäre.

Polysilane (Polymethylphenylsilane) besitzen beispielsweise je nach Lösungsmittel nach der Pyrolyse unter Inertgas bei 1200°C eine keramische Feststoffausbeute von 30 bis maximal 70 Gew.-%.

Für Spiegel- und Reflektorverwendungen im Temperaturbereich von beispielsweise 250 und 330 K ohne größere Temperaturschwankungen führt eine Klebung der Siliciumteile mittels Silikonen auf die Trägerstrukturen zu einer ausreichenden Verfestigung zwischen den Trägern und der Spiegelschicht.

Auch der Einsatz von Glasfritten führt bei einer entsprechenden Temperung über 600°C zu einer Applizierung der Silicium-körper durch Anschmelzvorgänge auf den CFC- oder CMC-Spiegelträgern.

Das erfindungsgemäße Verfahren sieht weiterhin vor, daß man mehrere Silicium-Formkörper oder Si-Wafer unterschiedlicher Dotierung bzw. Schmelzpunkte als sog. Multilayer auf die CFC-oder CMC- oder Wabenträgerstrukturen aufbringt, wobei die Silicium-Formkörper vorzugsweise derart angeordnet sind, daß das Si-Formteil mit dem niedrigsten Schmelzpunkt direkt auf dem Trägersubstrat aufgebracht ist und alle darüber angeordneten Silicium-Körper einen höheren Schmelzpunkt aufweisen. Undotiertes Reinstsilicium besitzt beispielsweise seinen Schmelzpunkt bei 1412°C. Je nach der Quantität der Verunreinigungen im Silicium (Dotierung) kann der Schmelzpunkt aufgrund von Eutektikumsbildungen entsprechend herabgesetzt werden.

Die so hergestellten Bauteile können dann noch einer Nachbearbeitung unterzogen werden, beispielsweise um optisch reflektierende Flächen bei einem Satelliten-Spiegel zu erzeugen. Zur Nachbearbeitung können die von der Metallbearbeitung her bekannten Schleif-, Läpp- oder Poliermaschinen und Werkzeuge verwendet werden, insbesondere auch Diamantwerkzeuge.

Wird die reflektierende/spiegelnde Fläche aus Wafer erzeugt, dann wird die Temperatur für den Anschmelzprozeß so gewählt, daß die glatte äußere Oberfläche des Wafers nicht anschmilzt. Bei Silicium-Formkörpern mit nichtglatten Oberflächen oder bei Verwendung von Si-Pulver entsteht die reflektierende Fläche aus der erstarrten Schmelze mit nachfolgendem Schleif- und Poliervorgang.

Eine weitere erfindungsgemäße Ausgestaltung sieht vor, daß man die auf die CFC- oder CMC-Spiegelträger applizierten Silicium-Formkörper zumindest oberflächlich zu hartem Siliciumcarbid (SiC) umwandeln kann. Insbesondere in den Anwendungsbereichen, in denen mit chemischem Angriff oder Abrasion zu rechnen ist, können die Spiegel oder Reflektoren mit ihrer Siliciumspiegelschicht einer kohlenstoffhaltigen Atmosphäre oberhalb 700°C ausgesetzt werden, wobei das Silicium mit dem Kohlenstoff reagiert und eine verschleißbeständige Oberflächenschicht aus Siliciumcarbid ausbildet. Beispielsweise reagiert das Silicium mit einem Gasgemisch bestehend aus Methan und Argon oder Wasserstoff bei Temperaturen von 1200 - 1300°C zu Siliciumcarbid. Im Temperaturbereich von 900 - 1200°C führt ein Gasgemisch bestehend aus C₃H₈ und H₂ ebenfalls zu einer entsprechenden Siliciumcarbid-Bildung.

Silicium-Spiegelflächen auf CFC- oder CMC-Substraten können erfindungsgemäß nicht nur durch die Applizierung von Silicium-Formkörpern, sondern auch unter Verwendung von Siliciumpulver auf den Spiegelträgern erzeugt werden. Dazu wird metallisches Siliciumpulver auf die zu verspiegelnden Oberflächen der CFC- oder CMC-Spiegelträger aufgestreut und im Vakuum oder unter Schutzgasatmosphäre oberhalb Temperaturen von 1000°C, vorzugsweise 1300° - 1600°C, geschmolzen. Nach dem Abkühlen weisen die Spiegel- oder Reflektorstrukturen aus CFC oder CMC oberflächlich eine geschlossene Siliciumschicht auf, welche sich durch eine schleifende Bearbeitung zu spiegelnden oder refleketierenden Oberflächen ausbildet.

Eine weitere vorteilhafte Ausgestaltung des erfindungsgemäßen Verfahrens sieht vor, daß die Siliciumspiegel-Schichten auf den CFC- oder CMC-Spiegelträgern für Anwendungen wie z.B. im Breitband- oder Multispektralsystem oberflächlich in Siliciumdioxid (SiO₂) oder Quarz umgewandelt werden können. Dazu wird die gesamte Spiegel- oder Reflektorstruktur oder andere optische Komponenten mit ihren spiegelnden Siliciumoberflächen in sauerstoffhaltiger Atmosphäre, vorzugsweise Luft, Temperaturen oberhalb von 500°C, vorzugsweise 800 - 1000°C, ausgesetzt werden und so das metallische Silicium oberflächlich zu Siliciumdioxid (SiO₂) oxidiert.

Das entwickelte Verfahren sieht auch vor, daß zur Herstellung von besonders komplexen Spiegel- oder Reflektorsystemen oder anderen optischen Komponenten auf CFC- oder CMC-Trägerbasis die spiegelnden oder reflektierenden Siliciumoberflächen über das heißisostatische Pressen (HIP) zu einem Werkstoffverbund mit durchgehender Flächenverbindung gefügt werden. Die Technologie des heißisostatischen Pressens beruht auf der Kombination von gleichzeitiger Druck- und Temperaturaufgabe auf die Spiegelkomponenten. Dabei wird der Druck über ein Gas allseitig auf die Reflektorstruktur ausgeübt und kann bis zu 2000 bar erreichen. Da es sich um einen allseitigen Gasdruck handelt, sind der Geometrie der Spiegel und Reflektoren keine Grenzen gesetzt. Allerdings muß dafür gesorgt werden, daß kein Gas in die mit den CFC- oder CMC-Trägern verbundenen Silicium-Schichten eindringen kann und die Verschweißung der Grenzflächen verhindert. Die Spiegelstrukturen werden deshalb vor dem heißisostatischen Pressen beispielsweise in Stahlbehälter gehüllt und so die zu verbindenden Flächen gegenüber dem außen anliegenden Gasdruck abgedichtet. Die Temperatur bei der Siliciumverspiegelung der CFC- oder CMC-Träger liegt unterhalb des Schmelzpunktes von Silicium. Der HIP-Prozeß wird unterhalb von 1412°C, vorzugsweise bei 1100 - 1412°C durchgeführt. Man erhält eine Diffusionsverbindung zwischen der oberflächlich vorliegenden Siliciumschicht und dem CFC-oder CMC-Spiegelträger. Bedingt durch den allseitigen Gasdruck bei gleichmäßiger Wärmeverteilung im Werkstück wird auch bei komplexen Strukturen eine homogene und durchgehende Flächenverbindung garantiert.

Genau wie bei der zuvor beschriebenen drucklosen Applizierung von Silicium-Formkörpern auf CFC oder CMC werden hier durch das Sintern unter Druck, die Si-Spiegelschicht und die Träger-Komponenten ineinander verpreßt und bilden unlösbare Verankerungen, Verzahnungen sowie Hinterschneidungen.

Vorteilhafterweise können auch hier Silicium-Formkörper oder Wafer jeglicher Geometrie und chemischer Zusammensetzung oder Siliciumpulver zur Erzeugung der spiegelnden oder reflektierenden Siliciumoberflächen herangezogen werden.

Das Aufbringen der Silicium-Formkörper auf die Trägerstrukturen bei erheblich niedrigeren Prozeßtemperaturen (wobei in bestimmten Anwendungsfällen unter Verzicht auf Schutzgas oder Vakuum in Normalatmosphäre gearbeitet werden kann) wird dadurch möglich, daß die Silicium-Formkörper vor dem Verbinden mit der Trägerstruktur mit Gold beschichtet werden. Silicium bildet zusammen mit Gold im Temperaturbereich von 350 - 400°C ein plastisch verformbares Schmelzeutektikum aus. Dadurch ist es möglich, die Silicium-Formkörper, z.B. Waver, bei Temperaturen von 300 - 600°C auf die Trägerstruktur durch Aufschmelzen aufzubringen.

Gold besitzt den Vorteil, daß es einen ähnlichen Wärmeausdehnungskoeffizienten wie Silicium hat, so daß thermisch verursachte Schäden infolge Temperaturwechselbeanspruchungen auszuschließen sind. Ein weiterer Vorteil von Gold besteht darin, daß es aufgrund seiner chemischen Inertheit nur mit Silicium reagiert. Dadurch ist ein Anschmelzen der goldbeschichteten Silicium-Formkörper auf die Trägerstrukturen im Grenzfall bei Normalatmosphäre im Niedrigtemperaturbereich von ca. 300 - 450°C möglich, wodurch sich die Kosten gegenüber Anschmelzen im Vakuum oder unter Schutzgas deutlich senken lassen. Bei hohen Qualitätsanforderungen bezüglich des einwandfreien Kontaktierens der Silicium-Formkörper auf die Trägerstrukturen ist das Aufsintern im Vakuum jedoch vorzuziehen.

Die Goldbeschichtung der Silicium-Formkörper kann z.B. durch Goldfolien oder durch physikalische Gasphasenabscheidung (Sputtern) erfolgen, die Schichtdicke sollte ca. im Bereich von 0,5 - 50µ liegen. Im Prinzip kann die Goldbeschichtung - statt auf den Silicium-Formkörper - auch auf der zu verspiegelnden Fläche der Trägerstruktur aufgebracht werden.

Anstelle von Gold können prinzipiell auch andere NE-Metalle oder Materialien verwendet werden, die mit Silicium ein plastisch verformbares Schmelzeutektikum ausbilden. Als Beispiel sei Aluminium genannt, das mit Silicium im Temperaturbereich- con ca. 500 - 650°C ein Schmelzeutektikum ausbildet. Da Aluminium jedoch eine sinterhemmende Al₂O₃-Oxidschicht ausbildet, muß hier unter Vakuum oder Schutzgas appliziert werden. Außerdem hat Aluminium einen höheren Wärmeausdehnungskoeffizienten als Silicium, wodurch Anwendungen mit stärkeren Temperaturschwankungen eingeschränkt sind.

Die Auswahl des Beschichtungsmaterials wird im Einzelfall von den Einsatzbedingungen, Qualitätsvorgaben und von den Kosten für Material und Herstellprozesse bestimmt werden.

Nachfolgend werden bevorzugte Ausführungsformen der Erfindung anhand von Abbildungen näher beschrieben. Hierbei zeigen
- Fig. 1: einen Querschliff einer Silicium-Wafer-Applizierung auf einem CMC-Substrat bei 20-facher Vergrößerung,
- Fig. 2: den Anschliff nach Fig. 1 bei 40-facher Vergrößerung,
- Fig. 3: den Anschliff nach Fig. 1 bei 100-facher Vergrößerung,
- Fig. 4: den Anschliff nach Fig. 1 bei 200-facher Vergrößerung,
- Fig. 5A: einen Großspiegel, der aus Facetten zusammengesetzt ist,
- Fig. 5B: einen Teilausschnitt des Spiegels nach Fig. 5A,
- Fig. 5C: eine andere Ausführungsform eines Großspiegels in einer Darstellung ähnlich der 5B,
- Fig. 6A: einen Längsschnitt durch eine bevorzugte Ausführungsform einer Trägerstruktur,
- Fig. 6B: einen Schnitt entlang der Linie VI-VI aus Fig. 6A,
- Fig. 7: ein Bild einer Silicium-Wafer-Applizierung auf einer mit Kohlefaser-Geweben ummantelten Wabenstruktur,
- Fig. 8A-D: eine Ausführungsform von Infrarot-Teleskopspiegeln,
- Fig. 9A-C: eine Darstellung von Verfahrensschritten einer weiteren Ausführungsform und
- Fig. 10A, B: eine Darstellung von Verfahrensschritten einer weiteren Ausführungsform ähnlich den nach Fig. 9.

### Beispiel 1:

40 Kohlefaser-Gewebeprepregs mit Satin-Bindung, einem Phenolharzanteil von 35 Gew.-% und einem Durchmesser von 150 mm werden in einer beheizbaren axialen Presse bei einer Temperatur von 200°C und einer Preßdauer von 8 Minuten zu einem CFC-Formkörper mit einem Durchmesser von 150 mm bzw. einer Wandstärke von 12 mm verpreßt. Der nach dem Entformen erhaltene Formkörper, beispielsweise diese Platte, wird nun in einem Reaktor unter Ausschluß von Sauerstoff, d.h. im Vakuum oder in einer Schutzgasatmosphäre, bei etwa 1000°C carbonisiert. Um die Reaktivität der Kohlenstoffasern zu minimieren bzw. den E-Modul zu beeinflussen, wird der Vollkörper einer Temperatur von mehr als 2000°C unter Sauerstoffausschluß, d.h. im Vakuum oder in einer Schutzgasatmosphäre, ausgesetzt, wodurch der durch Carbonisieren des Phenolharzes gebildete Matrixkohlenstoff zumindest teilweise graphitiert wird. Diese Graphitierung erfolgt beispielsweise mit einer Aufheizgeschwindigkeit von 30 K/min und einer Haltezeit von 2 Stunden bei 2100°C. Der erhaltene CFC-Vollkörper besitzt eine Dichte von 1,0 g/cm³.

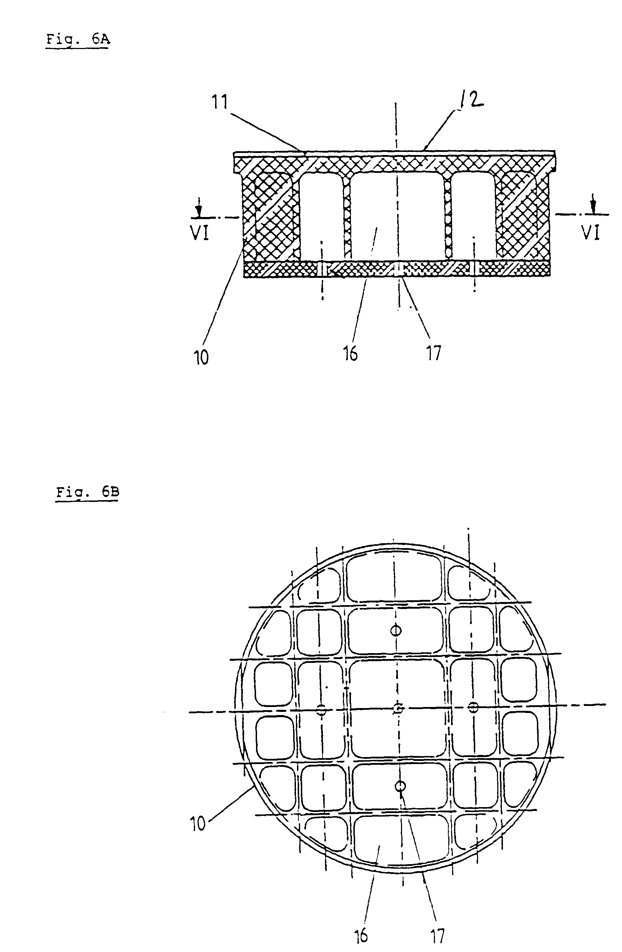

Aus dem Vollkörper wird dann maschinell durch Dreh-, Fräs- und/oder eine Schleifbearbeitung der in Fig. 6 dargestellte Rohling, welcher als Trägersubstrat für optisch reflektierende Spiegelstrukturen dient, hergestellt.

Der Rohling wird in einem Druck-Autoklaven bei 500 bar erneut mit Phenolharz imprägniert. Nach der Druckimprägnierung wird das Bauteil mit einem metallischen Silicium-Formkörper (Durchmesser 123 mm, Wandstärke 0,8 mm) beklebt. Als Kleber wird z.B. ein handelsüblicher Siliciumcarbidkleber vom Typ RTS 7700 der Fa. Kager verwendet, welcher bei 100°C an Luft ohne Schwinden antrocknet. Das imprägnierte Bauteil wird in einem Reaktor bei 1000°C und bei einem Druck von 10 mbar erneut carbonisiert. Die Aufheizgeschwindigkeit beträgt 2 Kelvin pro Minute, die Haltezeit 12 Stunden.

Der Rohling mit aufgeklebtem Silicium-Formkörper und einer Dichte von 1,18 g/cm³ wird nun in einem Vakuumofen mit einer Aufheizgeschwindigkeit von 20 K pro Minute auf eine Temperatur von 1390°C aufgeheizt und dort 30 Minuten gehalten. Nach der Abkühlung auf Raumtemperatur ist die Silicium-Scheibe ohne Deformierung fest mit dem CFC verzahnt.

Die mikroskopische Untersuchung der Schnittfläche durch ein Referenzbauteil bestätigte, daß der Silicium-Formkörper fest verzahnt und ohne erkennbare Risse und Poren auf das CFC-Grundsubstrat gefügt ist. Polierversuche mit Submikron-Diamantsuspensionen ergaben, daß sich die Silicium-Oberflächen problemlos auf Rauhtiefen Rₐ von kleiner als 15 Angström schleifen lssen und sich damit als optisch reflektierende Strukturen ausgezeichnet eignen.

### Beispiel 2:

Kohlenstoff-Kurzfasern mit einer Länge von 10 - 30 mm werden in einer Phenolharzsuspension aufgeschlämmt. Der Fasergehalt in der Suspension beträgt 40 Gew.-%. Die Suspension wird in eine zylindrische Form mit einem Durchmesser von 150 mm und einer Höhe von 100 mm gefüllt. Bei 60 bs 70°C werden die im Phenolharz enthaltenen Lösungsmittel unter Vakuumatmosphäre entfernt. Bei einer Temperatursteigerung auf 180°C erfolgt die Aushärtung des Phenolharzes. Nach dem Entformen wird der zylindrische CFC-Vollkörper unter Ausschluß von Sauerstoff wie in Beispiel 1 carbonisiert.

Der enthaltene CFC-Vollkörper mit quasi-isotropem Gefüge weist eine Dichte von 0,55 g/cm³ und eine Porosität von etwa 70 Vol.-% auf. Um die Reaktivität der verwendeten Kohlefasern zu minimieren bzw. aus dem Phenolharz gebildeten Matrix-Kohlenstoff zumindest teilweise zu Graphit umzuwandeln, wird eine Graphitierung bei Temperaturen von größer 2000°C, wie in Beispiel 1 beschrieben, vorgenommen.

Aus dem zylindrischen Vollkörper werden dann maschinell durch Dreh-, Fräs- und/oder Schleifbearbeitung die in Fig. 6 dargestellten Bauteile hergestellt, die als Trägersubstrat für die Satelliten-Spiegelstrukturen dienen können.

Die Bauteile werden in einem Vakuumofen 50 Stunden lang bei 750°C und bei einem Partialdruck von 2 mbar unter Verwendung von Propan und Argon im Verhältnis 1:5 durch chemische Gasphasenabscheidung mit pyrolytischem Kohlenstoff infiltriert, bis ihre Dichte 0,90 g/cm³ beträgt und ihre offene Porosität auf ca. 30% abgenommen hat.

Die Bauteile werden jetzt in einer Hochtemperatur-Vakuumkammer in ein Graphitgefäß gestellt, dessen Boden mit geschmolzenem metallischen Silicium bedeckt ist. Aufgrund der Kapillarkräfte steigt das geschmolzene Silicium in dem Rohling nach oben, wodurch die Poren fast ganz mit Silicium gefüllt werden. Bei weiterer Temperatursteigerung auf etwa 1750°C - 1800°C wird ein Teil des metallischen Siliciums mit pyrolytischem Kohlenstoff zu Siliciumcarbid umgesetzt.

Nach Abkühlung auf Raumtemperatur weist das Bauteil eine Dichte von 1,75 g/cm³ auf, wobei in der Matrix 20% unreagiertes, freies metallisches Silicium vorliegt.

Das entstandene Ceramic Matrix Composite (CMC)-Bauteil 10 mit Ausnehmungen 16 und Bohrungen 17 wird jetzt an der für die Spiegelfläche vorgesehenen Stirnseite mittels einer Schleifmaschine geschliffen. Auf die geschliffene Oberfläche wird ein Silicium-Formteil 11 mit einem Durchmesser von 123 mm und einer Wandstärke von 1,0 mm ohne Verwendung von Klebern oder Harzbindemitteln aufgelegt und in einen Schutzgasofen eingebaut. In Argon-Atmosphäre wird das Bauteil mit einer Aufheizgeschwindigkeit von 30 K/min auf eine Temperatur von 1405°C aufgeheizt. Nach einer Haltezeit von 20 Minuten werden die Strukturen auf Raumtemperatur abgekühlt.

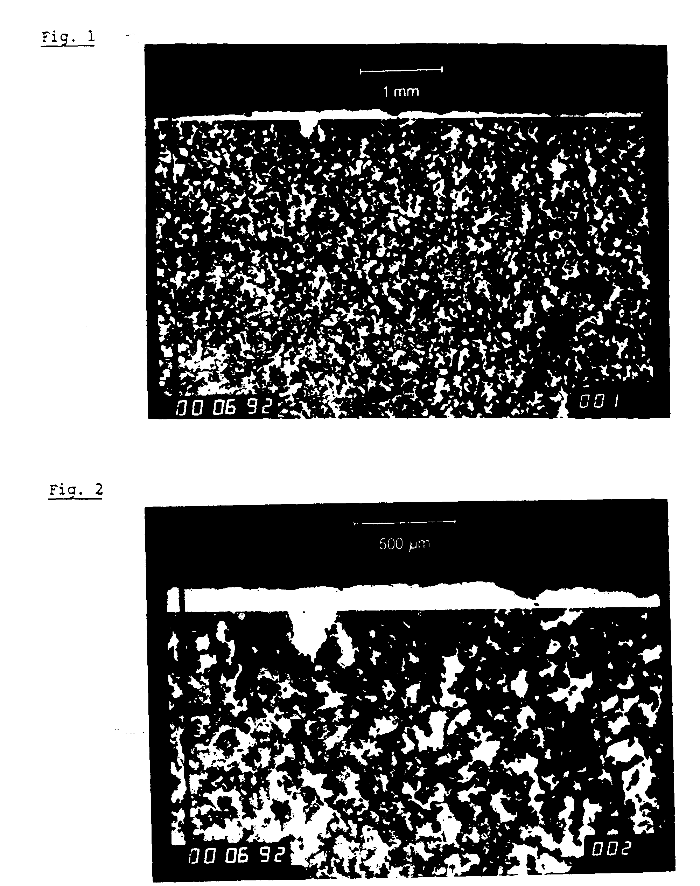

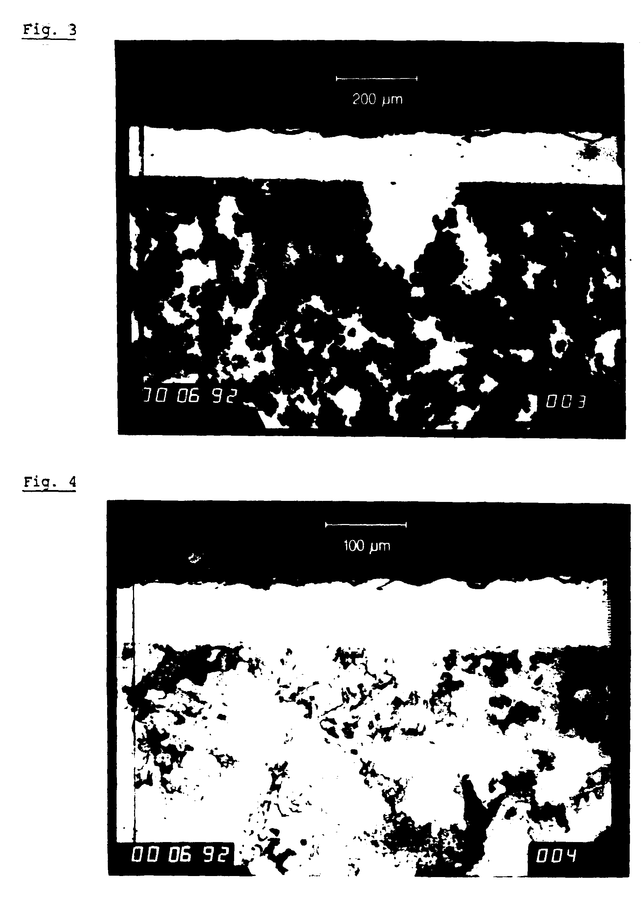

Um die Applizierung bzw. Fügung der Silicium-Teile zu prüfen, wurde ein Bauteil zersägt und ein Anschliff angefertigt. Die riß-, poren- und fugenfreie Aufsinterung des Siliciums zeigen die in Fig. 1 bis 4 dargestellten Mikroskop-Aufnahmen. Die Verzahnung beruht offensichtlich auf Diffusions- und Sintervorgängen zwischen dem Silicium aus dem CMC-Träger-Bauteil und dem Silicium-Formteil.

Nach der Bearbeitung wurden die Spiegelstrukturen auf ihre Thermoschock-Beständigkeit hin untersucht. In hundert Versuchen sind die Strukturen zyklischen Temperaturwechseln im Bereich von 0 - 700 K ausgesetzt worden. Gefügeanschliffe zeigten nach der Temperaturwechseluntersuchung keinerlei Rißbildungen im Gefüge und an der Grenzfläche zwischen Trägersubstrat und dem Silicium.

Aus dem Oberflächenbereich einer Spiegelstruktur wurde ein Stab mit den Abmessungen 50 x 4 x 4 mm herausgesägt und eine Dilatometer-Messung durchgeführt. Im Temperaturbereich von 0 - 700 K zeigt der Spiegelwerkstoff einen Wärmeausdehnungskoeffizienten von nur 2,0·10⁻⁶K⁻¹.

### Beispiel 3:

Es wird ein CFC-Vollkörper gemäß Beispiel 1 hergestellt. Nach der Carbonisiserung, Graphitierung und Infiltration über die chemische Gasphasenabscheidung wird der CFC-Zylinder, wie in Fig. 6 angegeben, mechanisch bearbeitet. Auf das hochporöse CFC-Bauteil wird ein Silicium-Wafer mit einer Wandstärke von 0,8 mm unter Verwendung von Polysilan-Precursoren der Firma Wacker aufgeklebt. Nach dem Trocknen und Härten des Harzbindemittels in Argonatmosphäre bei 180°C wird das Bauteil mit einer Aufheizgeschwindigkeit von 3 Kelvin pro Minuten auf 1200°C weiter aufgeheizt und so die Polysilan-Precursoren pyrolisiert.

Danach wird die CFC-Struktur in einen Vakuumofen in einen Graphittiegel gestellt, der mit pulverförmigem metallischen Silicium gefüllt ist. Mit einer Aufheizgeschwindigkeit von 20 K pro Minute wird das System auf 1400°C aufgeheizt und nach einer 30-minütigen Haltezeit auf Raumtemperatur abgekühlt. Das aufgrund einer Dotierung schon bei ungefähr 1350°C schmelzende Silicium diffundiert in die poröse CFC-Matrix bis zur Trägersubstrat-Wafer-Grenzfläche und bewirkt eine sog. Reaktionsapplizierung der Silicium-Wafer auf den Composite. Ein Gefügeanschliff zeigt, daß sich das infiltrierte Silicium teilweise mit pyrolytischem Kohlenstoff zu Siliciumcarbid umgesetzt hat und der Gehalt an ungebundenem Silicium im Bauteil 21% beträgt. Der Silicium-Wafer ist ohne Poren, Risse oder Fugen und fest verzahnt auf das CMC-Composite gefügt. Diese optisch reflektierende Struktur mit einer Dichte von 1,7 g/cm³ wird mittels einer Läppmschine kurzzeitig auf die geforderte Rautiefe poliert.

Bei diesem erfindungsgemäßen Verfahren ist besonders vorteilhaft, daß insitu sowohl die CMC-Herstellung als auch die Reaktionsapplizierung bzw. Fügung der Silicium-Wafer auf den CFC-Rohlingen erfolgt und so hochglänzende Spiegelstrukturen ausgebildet werden.

### Beispiel 4:

Es wird ein handelsübliches Wabenmaterial auf Hartpapier-Basis mit einem Raumgewicht von 0,2 g/cm³ und einer Wabenschlüsselweite von 6 mm mit einem Phenolharz-Bindemittel imprägniert und bei 70°C getrocknet.

Auf den Wabenkörper mit einem Durchmesser von 400 mm und einer Wandstärke von 10 mm sind nun in einer beheizbaren Presse bei 200°C stirnseits jeweils drei Lagen Kohlefasergewebe-Prepregs aufgepreßt bzw. laminiert.

Die entstandene CFK-Struktur wird unter Ausschluß von Sauerstoff mit einer Aufheizgeschwindigkeit von 2 Kelvin pro Minuten auf 1000°C aufgeheizt und carbonisiert. Nach einer Haltezeit von 6 Stunden wird auf Raumtemperatur abgekühlt, und man erhält eine Wabenstruktur auf Kohlenstoffbasis, die - abgesehen von einer linearen Schrumpfung von etwa 17% - dem ursprünglichen CFK-Bauteil entspricht. Zur weiteren Verfestigung wird die noch poröse Wabenstruktur über die chemische Gasphasenabscheidung, wie in den Beispielen 1 und 3 beschrieben, mit pyrolytischem Kohlenstoff infiltriert. Das so gewonnene Bauteil mit einem Raumgewicht von 0,22 g/cm³ zeigt 4-Punkt-Biegebruchfestigkeiten von größer 150 N/mm².

Eine der mit Kohlefasergewebe laminierten Stirnseiten wird oberflächlich geschliffen und mit zwei Silicium-Wafern beklebt. Als Harzbindemittel wird ein Phenolharz-Siliciumpulver-Gemisch mit einem Gewichtsverhältnis von 2:1 verwendet.

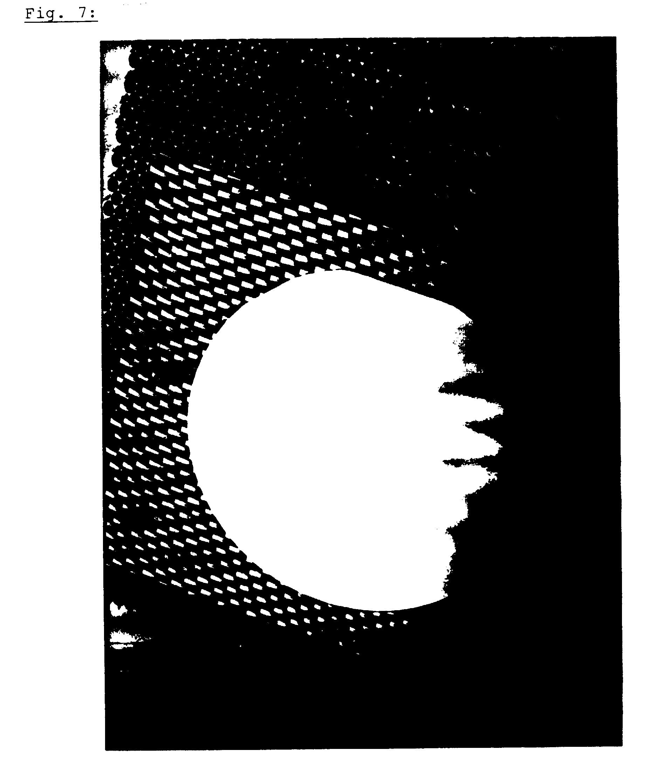

Im Anschluß daran erfolgt eine Siliciuminfiltration gemäß Beispiel 3, wobei die Wafer auf die Wabenstruktur appliziert werden. Die nach der Abkühlung erhaltene Spiegelstruktur auf Wabenbasis mit einem realen Raumgewicht von 0,42 g/cm³ ist in Fig. 7 dargestellt.

Der entstandene extrem leichte Konstruktionswerkstoff zeichnet sich neben seiner hohen Steifigkeit und Druckfestigkeit durch eine geringe Wärmeleitfähigkeit aus. Als besonders vorteilhaft erweist sich auch, daß die inneren flexiblen Wabenstrukturen wegen ihrer Dünnwandigkeit bei Thermoschock-Beanspruchung entsprechende Wärmeausdehnungen kompensieren und so zu erwartende thermisch induzierte Risse auf ein Minimum reduziert werden.

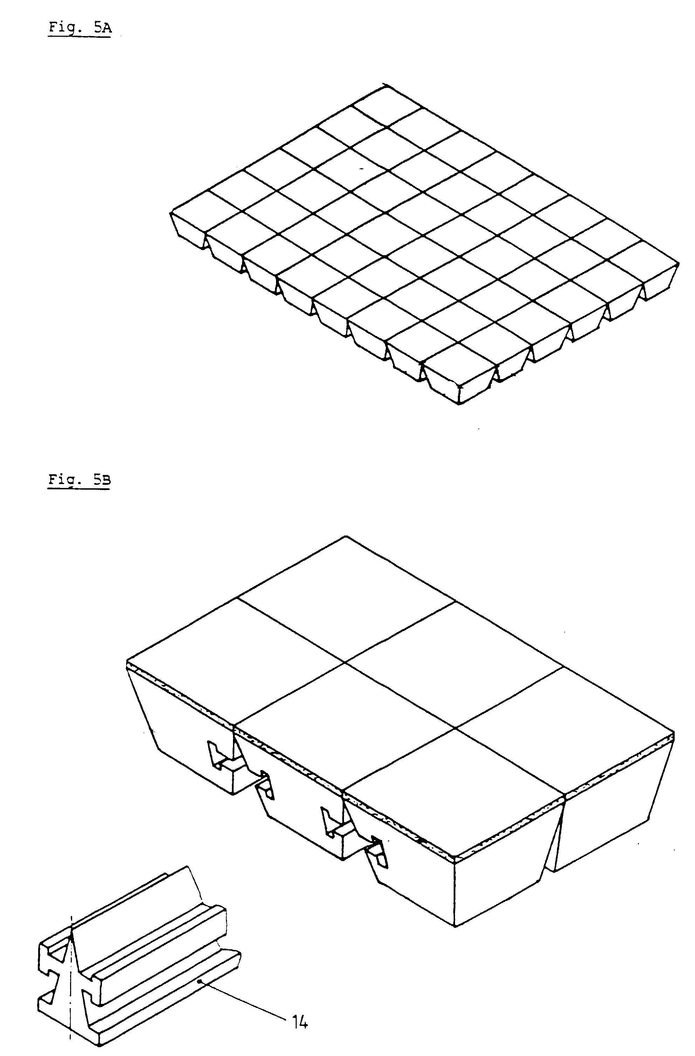

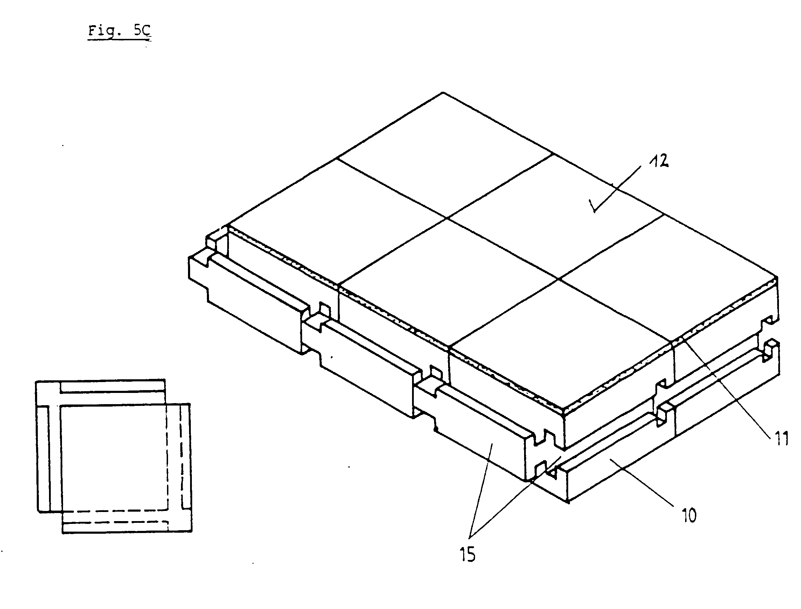

In Fig. 5 ist gezeigt, wie man einen großflächigen Spiegel aus Teilstücken zusammensetzen kann. Besonders vorteilhaft ist hier der Umstand, daß mittels Grundbausteinen bestehend aus Silicium-Wafern 11 und größenmäßig angepaßten Trägerstrukturen 10 jede beliebige Spiegelgröße zusammengesetzt werden kann. Die Trägerstrukturen 10 werden hierbei über Stege 14 (vorzugsweise aus CFC-Material) zusammengehalten. Wenn die Spalten zwischen den einzelnen Bausteinen nicht stören, so kann der Aufbau aus fertigen Einzel-Reflektoren erfolgen. Selbstverständlich ist es auch möglich, die "Rohlinge" miteinander zu verbinden und gemeinsam dem oben dargestellten Verfahren zu unterziehen, so daß sich alle Teile fest miteinander verbinden.

Bei der in Fig. 5C gezeigten Ausführungsform sind keine Stege 14 mehr nötig, da die Trägerstrukturen 10 jeweils Nut- und Federverbindungen 15 aufweisen.

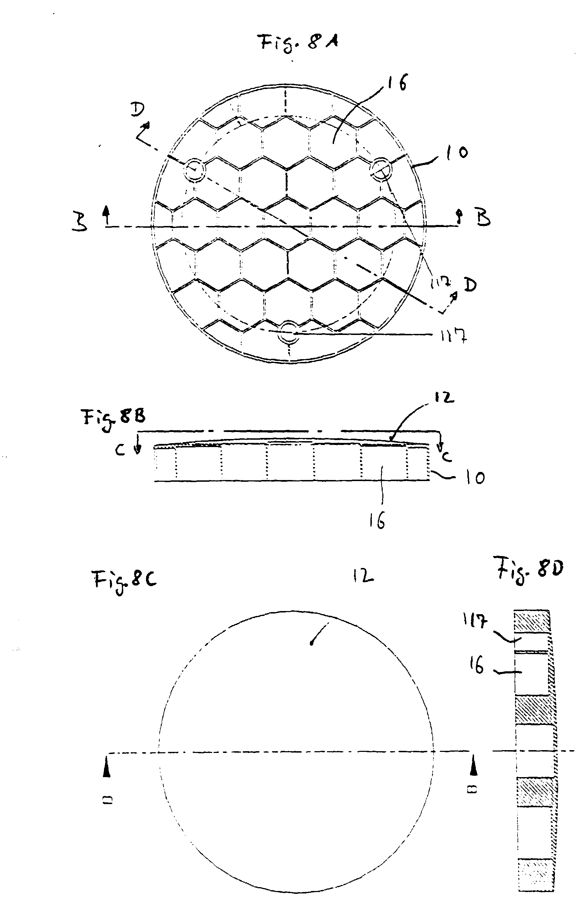

Bei der in den Figuren 8 gezeigten Ausführungsform der Erfindung ist das CMC-Bauteil zur Bildung der Trägerstruktur 10 mit wabenförmigen Ausnehmungen 16 versehen. Darüber hinaus sind bei diesem Ausführungsbeispiel drei Halteausnehmungen 117 miteingeformt, an welchen Sockelstifte oder dergl. zum Halten des fertigen Spiegels fixiert werden können. Im übrigen sind bei dieser Ausführungsform der Erfindung für gleiche oder gleich wirkende Teile dieselben Bezugsziffern angegeben. Die Herstellung kann wie oben beschrieben erfolgen.

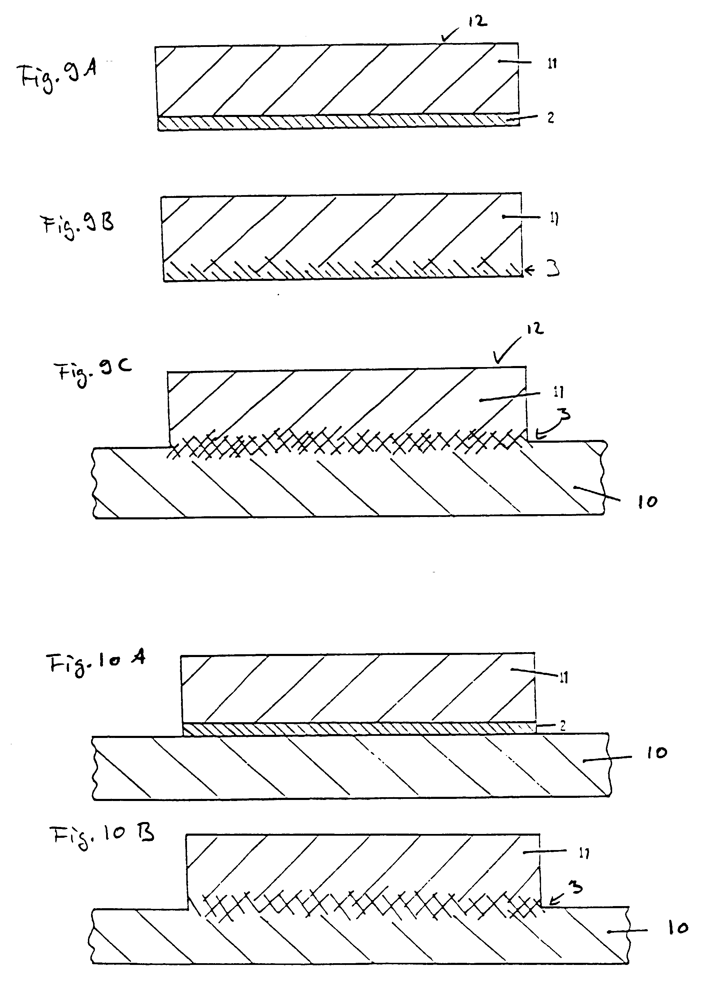

Nachfolgend wird anhand der Figuren 9 und 10 eine weitere Ausführungsform des Verfahrens beschrieben.

Wie in Fig. 9A gezeigt, wird hierbei zunächst ein Formkörper 11 aus metallischem Silicium (ein Wafer) an seiner, der reflektierenden Fläche 12 gegenüberliegenden Fläche mit einem NE-Metall, insbesondere mit Gold, beschichtet. Dieses Beschichten kann durch Aufbringen einer Goldfolie oder durch Sputtern erfolgen. Der so entstehende Körper ist in Fig. 9A gezeigt.

Dieser Körper wird nun einer Wärmebehandlung unterzogen, so daß die Goldschicht 2 mit dem Silizium 11 ein Schmelzeutektikum ausbildet, das in Fig. 9B mit der Bezugsziffer 3 bezeichnet ist.

Der so entstandene, in Fig. 9B gezeigt Körper wird nun auf die Trägerstruktur 10 aufgebracht, woraufhin die Gesamtanordnung einer weiteren Wärmebehandlung in einem Temperaturbereich zwischen 300 und 600°C unterzogen wird. Hierbei entsteht über den Bereich des Schmelzeutektikums 3 eine innige Verbindung des (in Fig. 9C) oberen Silicium-Formkörpers 11 mit der unteren Tärgerstruktur 10.

Es ist auch möglich, anstelle eines gesonderten Verfahrensschrittes zur Bildung des Schmelzeutektikums auf der einen Fläche des Wafers 11 (gemäß Fig. 9) einen Wafer 11 unter Zwischenlage einer Goldschicht 2 direkt auf die Trägerstruktur 10 aufzubringen (Fig. 10A) und dann in einem einzigen Verfahrensschritt die beiden Körper 10 und 11 unter Bildung einer Zone 3 des Schmelzeutektikums miteinander zu verbinden, wie dies in Fig. 10B gezeigt ist.

Wesentlich an dieser Ausführungsform des Verfahrens ist die Tatsache, daß die Verbindung zwischen dem Silizium-Formkörper (dem Wafer) und der Trägerstruktur bei Temperaturen zwischen etwa 300 und 600°C bewerkstelligt werden kann, während bei der oben beschriebenen Ausführungsform des erfindungsgemäßen Verfahrens die Prozeßtemperaturen zwischen etwa 900 und 1500°C liegen. Darüber hinaus kann insbesondere bei Verwendung von Gold als NE-Metall in Normalatmosphäre bzw. bei Normaldruck gearbeitet werden.

Aus obiger Beschreibung ergibt sich, daß verschiedene Verfahrensschritte miteinander ohne weiteres kombinierbar sind.

## Patentansprüche

1. Verfahren zur Herstellung von Reflektoren, Spiegeln, oder Körpern zur Reflexion elektromagnetischer Wellen, wobei
- auf mindestens einer Oberfläche eines Träger-Formkörpers eine Außenschicht angebracht wird, deren Oberfläche die elektromagnetischen Wellen in eine definierte Richtung reflektiert,
- der Träger-Formkörper aus porösem, hochtemperaturbeständigem Material als Trägerstruktur hergestellt wird, auf die mindestens eine Schicht metallisches Silicium entweder in Form von Si-Pulver, Si-Wafern, Si-Formkörpern oder als Kombination hiervon zur Bildung der reflektierenden oder spiegelnden Außenschicht aufgebracht wird und
- wobei der Träger-Formkörper mit der der Außenschicht gegenüberliegenden Seite in ein Bad mit dotiertem und daher niedriger schmelzendem Silicium derart verbracht wird, daß das dotierte Silicium durch Kapillarkräfte im Träger-Formkörper bis zum Si-Pulver, dem Si-Wafer, dem Si-Formkörper oder der Kombination hiervon hochsteigt und sich mit diesem verbindet.

2. Verfahren nach Anspruch 1,
**dadurch gekennzeichnet**, daß
man den Formkörper aus CFC-Verbundwerkstoff oder CMC-Werkstoff herstellt.

3. Verfahren nach einem der vorhergehenden Ansprüche,
**dadurch gekennzeichnet**, daß
man das metallische Silicium mit der Trägeroberfläche in einer Schutzgasatmosphäre oder im Vakuum verbindet.

4. Verfahren nach einem der vorhergehenden Ansprüche,
**dadurch gekennzeichnet**, daß
man das metallische Silicium mit der Trägeroberfläche bei einer Temperatur oberhalb von 800°C vorzugsweise bei einer Temperatur zwischen 1300°C und 1600°C, besonders vorzugsweise bei einer Temperatur zwischen 1350°C und 1450°C bearbeitet.

5. Verfahren nach einem der vorhergehenden Ansprüche,
**dadurch gekennzeichnet**, daß
man das metallische Silicium vor dem Verbinden mit dem Träger-Formkörper auf die Trägeroberfläche aufklebt, wobei vorzugsweise die Klebung mittels eines Klebers erfolgt, der Diffusions-, Sinter- oder Anschmelzvorgänge fördert, wobei vorzugsweise die Klebung mittels eines Harz-Bindemittels oder eines Klebers auf Kohlenstoff-, Silicium- oder Siliciumcarbid-Basis oder Precursoren auf Polysilan- oder Siliciumcarbonitrit-Basis oder Silikonen erfolgt.

6. Verfahren nach einem der vorhergehenden Ansprüche,
**dadurch gekennzeichnet**, daß
dann, wenn das metallische Silicium in Form von Wafern aufgebracht wird, zur Herstellung größerer Flächen diese mit Wafern derart belegt werden, daß die Trägeroberfläche im wesentlichen lückenfrei belegt ist.

7. Verfahren nach einem der vorhergehenden Ansprüche,
**dadurch gekennzeichnet**, daß
man das metallische Silicium im mehreren Schichten aufbringt, wobei die Schichten aus metallischem Silicium vorzugsweise unterschiedlicher Dotierungen bzw. unterschiedlichen Verunreinigungsgrades bestehen, wobei man vorzugsweise das Silicium mit der höchsten Dotierung bzw. mit dem höchsten Verunreinigungsgrad als nächste Schicht zur Trägeroberfläche aufbringt und man insbesondere bei Zusammensetzung der Oberfläche aus mehreren Teil-Flächen als oberste Schicht eine ggf. weitere Schicht Silicium besonders hoher Reinheit aufbringt.

8. Verfahren nach Anspruch 1,
**dadurch gekennzeichnet**, daß
man eine Trägerstruktur herstellt, die aus mehreren Teilelementen als Träger-Formkörper gesteckt oder gefügt ist, und diese durch das aufsteigende Silicium zu einer Gesamtstruktur verfestigt.

9. Verfahren nach Anspruch 1,
**dadurch gekennzeichnet**, daß
man die Träger-Formkörper aus Kohlenstoff-Material bzw. kohlenstoffhaltigem und danach karbonisiertem bzw. grafitiertem Material herstellt.

10. Verfahren nach einem der vorhergehenden Ansprüche,
**dadurch gekennzeichnet**, daß
man die Trägeroberfläche vor Aufbringen des metallischen Siliciums glättet, insbesondere schleift.

11. Verfahren nach einem der vorhergehenden Ansprüche,
**dadurch gekennzeichnet**, daß
man den Träger-Formkörper aus mehreren, miteinander verbundenen Formkörpern herstellt.

12. Verfahren nach einem der vorhergehenden Ansprüche,
**dadurch gekennzeichnet**, daß
man im Träger-Formkörper Ausnehmungen vorsieht.

13. Verfahren nach einem der vorhergehenden Ansprüche,
**dadurch gekennzeichnet**, daß
man in den Träger-Formkörper pyrolytischen Kohlenstoff, vorzugsweise durch chemische Gasphasenabscheidung, einbringt.

14. Verfahren nach Anspruch 2,
**dadurch gekennzeichnet**, daß
man den Träger-Formkörper derart herstellt, daß er einen unumgesetzten metallischen Siliciumanteil von 5-50 Gew.-% aufweist.

15. Verfahren nach einem der vorhergehenden Ansprüche,
**dadurch gekennzeichnet**, daß
man die spiegelnde Schicht karbidisiert und ggf. glättet oder poliert, wobei man vorzugsweise die Karbidisierung in einer kohlenstoffhaltigen Atmosphäre, insbesondere in einer Kohlenwasserstoffe wie Propan oder Methan enthaltenden Atmosphäre, bei erhöhter Temperatur, vorzugsweise oberhalb von 700°C, ausführt.

16. Verfahren nach einem der vorhergehenden Ansprüche,
**dadurch gekennzeichnet**, daß
die Silicium-Formkörper mit einer den Anschmelzvorgang fördernden Glasfritte auf dem Träger-Formkörper fixiert werden.

17. Verfahren nach einem der vorhergehenden Ansprüche,
**dadurch gekennzeichnet**, daß
zur Erzeugung von reflektierenden Flächen auf Trägerstrukturen sowohl metallische Silicium-Formkörper als auch Silicium-Wafer als auch Siliciumpulver oder eine Kombination dieser Formen verwendet werden.

18. Verfahren nach einem der vorhergehenden Ansprüche,
**dadurch gekennzeichnet**, daß
die Silicium-Formkörper an ihrer Oberfläche zu Siliciumdioxid (SiO₂) oder Quarz oxidiert werden, indem sie in sauerstoffhaltiger Atmosphäre, vorzugsweise Luft, Temperaturen oberhalb von 500°C ausgesetzt werden.

19. Verfahren nach Anspruch 1,
**dadurch gekennzeichnet**, daß
man das metallische Silicium vor einem Anschmelzen auf die Trägerstruktur auf der Anschmelzfläche mit einem NE-Metall, das mit Silicium ein Schmelzeutektikum ausbildet, vorzugsweise mit Gold beschichtet und durch Wärmebehandlung von vorzugsweise 300 bis 600°C das Schmelzeutektikum erzeugt.

20. Verfahren nach Anspruch 19,
**dadurch gekennzeichnet**, daß
das NE-Metall entweder auf eine Anschmelzfläche des metallischen Siliciums oder auf die der Trägerstruktur oder zwischen beiden aufgebracht wird.

21. Verfahren nach einem der Ansprüche 19 oder 20,
**dadurch gekennzeichnet**, daß
das Anschmelzen des beschichteten metallischen Siliciums auf die Trägerstruktur im Temperaturbereich von 300 bis 600°C erfolgt.

22. Verfahren nach einem der Ansprüche 19 bis 21,
**dadurch gekennzeichnet**, daß
das Anschmelzen des mit Gold beschichteten metallischen Siliciums in Normalatmosphäre erfolgt.

23. Verfahren nach Anspruch 19,
**dadurch gekennzeichnet**, daß
das Schmelzeutektikum des metallischen Siliciums mit dem NE-Metall in einem separaten, vom Aufschmelzprozeß auf die Trägerstruktur unabhängigen Wärmeprozeß erzeugt wird.

24. Verfahren nach Anspruch 19,
**dadurch gekennzeichnet**, daß
das Schmelzeutektikum des metallischen Siliciums nur mit dem NE-Metall (2) in einem einzigen Wärmeprozeß zugleich mit dem Anschmelzen auf die Trägerstruktur erzeugt wird.

25. Verfahren nach Anspruch 19,
**dadurch gekennzeichnet**, daß
bei NE-Metallen (2), die eine Oxidschicht bilden, der Prozeß der Eutektikumsbildung und des Anschmelzens im Vakuum oder unter Schutzgas erfolgt.

26. Verfahren nach Anspruch 19,
**dadurch gekennzeichnet**, daß
die Beschichtung des metallischen Siliciums mit Gold entweder durch Goldfolien oder durch Gasphasenabscheidung, d.h. Sputtern, erfolgt.

27. Reflektor mit einem Träger-Formkörper (10) und einer Außenschicht (11) mit reflektierender Oberfläche (12),
**dadurch gekennzeichnet**, daß
die Außenschicht (11) aus metallischem Silicium besteht und mit dem Träger-Formkörper (10) fest verbunden ist,
- wobei der Träger-Formkörper (10) und/oder die Außenschicht (11) aus mehreren Stücken zusammengesetzt und die Stücke miteinander fest verbunden sind, vorzugsweise zur Bildung einstückiger Körper und
- wobei der Träger-Formkörper (10) porös ist und/oder Ausnehmungen (13) aufweist.

28. Reflektor nach Anspruch 27,
**dadurch gekennzeichnet**, daß
die Trägerstruktur (10) aus CFC- oder CMC-Material besteht.

29. Verwendung eines Reflektors nach einem der Ansprüche 27 oder 28 in einem Satelliten und/oder in bewegten Reflexions- oder Spiegelsystemen und/oder als Spiegel für Licht im IR-UV Bereich und/oder als Antennen-Reflektor und/oder als Reflektor zur Sonnenenergie-Gewinnung.

## Claims

1. Process for producing reflectors, mirrors or bodies for reflecting electromagnetic waves, wherein
- an outer layer whose surface reflects electromagnetic waves in a defined direction is applied to at least one surface of a shaped support body,
- the shaped support body is produced from a porous, high-temperature-resistant material as support structure to which material there is applied at least one layer of metallic silicon either in the form of Si powder, Si wafers, shaped Si bodies or a combination thereof to form the reflective or specular outer layer and
- the side of the shaped support body which is opposite the outer layer is placed in a bath containing doped and therefore low-melting silicon in such a way that the doped silicon rises under the action of capillary forces in the shaped support body to reach the Si powder, the Si wafer, the shaped Si body or the combination thereof and joins to this.

2. Process according to Claim 1, characterized in that the shaped body is produced from CFC composite or CMC material.

3. Process according to any of the preceding claims, characterized in that the metallic silicon is joined to the support surface in a protective gas atmosphere or in a vacuum.

4. Process according to any of the preceding claims, characterized in that the metallic silicon is processed with the support surface at a temperature above 800°C, preferably at a temperature between 1300°C and 1600°C, particularly preferably at a temperature between 1350°C and 1450°C.

5. Process according to any of the preceding claims, characterized in that the metallic silicon is, before being joined to the shaped support body, adhesively bonded to the support surface, with the adhesive bonding preferably being carried out by means of an adhesive which promotes diffusion, sintering or partial melting processes, with the adhesive bonding preferably being carried out by means of a resin binder or an adhesive based on carbon, silicon or silicon carbide or precursors based on polysilane or silicon carbonitride or silicones.

6. Process according to any of the preceding claims, characterized in that when the metallic silicon is applied in the form of wafers, relatively large areas are produced by covering them with wafers in such a way that the support surface is covered with essentially no gaps.

7. Process according to any of the preceding claims, characterized in that the metallic silicon is applied in a plurality of layers, with the layers comprising metallic silicon preferably with different doping or different degrees of impurity, where the silicon having the highest doping or having the highest degree of impurity is preferably applied as the layer next to the support surface and, particularly when the surface is composed of a plurality of sub-areas as uppermost layer, a possibly further layer of silicon of particularly high purity is applied.

8. Process according to Claim 1, characterized in that a support structure made of a plurality of subelements plugged or joined together as shaped support body is produced and this is strengthened by the rising silicon to form an overall structure.

9. Process according to Claim 1, characterized in that the shaped support body is produced from carbon material or carbon-containing and then carbonized or graphitized material.

10. Process according to any of the preceding claims, characterized in that the support surface is smoothed, in particular ground, before application of the metallic silicon.

11. Process according to any of the preceding claims, characterized in that the shaped support body is produced from a plurality of shaped bodies joined to one another.

12. Process according to any of the preceding claims, characterized in that recesses are provided in the shaped support body.

13. Process according to any of the preceding claims, characterized in that pyrolytic carbon is introduced into the shaped support body, preferably by chemical vapour deposition.

14. Process according to Claim 2, characterized in that the shaped support body is produced so as to have an unreacted metallic silicon content of 5-50% by weight.

15. Process according to any of the preceding claims, characterized in that the specular layer is carbided and, if desired, smoothed or polished, with the carbiding preferably being carried out in a carbon-containing atmosphere, in particular in an atmosphere containing hydrocarbons such as propane or methane, at elevated temperature, preferably above 700°C.

16. Process according to any of the preceding claims, characterized in that the shaped silicon bodies are fixed to the shaped support body using a glass frit which promotes the partial melting process.

17. Process according to any of the preceding claims, characterized in that shaped metallic silicon bodies or silicon wafers or silicon powder or a combination of these forms is used for producing reflecting areas on support structures.

18. Process according to any of the preceding claims, characterized in that the shaped silicon bodies are oxidized on their surface to silicon dioxide (SiO₂) or quartz by being subjected to temperatures above 500°C in an oxygen-containing atmosphere, preferably air.

19. Process according to Claim 1, characterized in that the metallic silicon is, before partial melting onto the support structure, coated on the surface to be partially melted with a nonferrous metal which forms a melt eutectic with silicon, preferably with gold, and the melt eutectic is produced by heat treatment at preferably from 300 to 600°C.

20. Process according to Claim 19, characterized in that the nonferrous metal is applied either to a surface to be partially melted of the metallic silicon or to that of the support structure or between the two.

21. Process according to either Claim 19 or 20, characterized in that the partial melting of the coated metallic silicon onto the support structure is carried out in the temperature range from 300 to 600°C.

22. Process according to any of Claims 19 to 21, characterized in that the partial melting of the gold-coated metallic silicon is carried out in a normal atmosphere.

23. Process according to Claim 19, characterized in that the melt eutectic of the metallic silicon with the nonferrous metal is produced in a separate thermal process independent of the process of melting onto the support structure.

24. Process according to Claim 19, characterized in that the melt eutectic of the metallic silicon only with the nonferrous metal (2) is produced in a single thermal process simultaneous with the partial melting onto the support structure.

25. Process according to Claim 19, characterized in that in the case of nonferrous metals (2) which form an oxide layer, the process of eutectic formation and of partial melting is carried out in a vacuum or under protective gas.

26. Process according to Claim 19, characterized in that the coating of the metallic silicon with gold is carried out either by means of gold foils or by means of vapour deposition, i.e. sputtering.

27. Reflector comprising a shaped support body (10) and an outer layer (11) having a reflective surface (12), characterized in that the outer layer (11) comprises metallic silicon and is joined firmly to the shaped support body (10),
- where the shaped support body (10) and/or the outer layer (11) is composed of a plurality of pieces and the pieces are firmly joined together, preferably to form single-piece bodies and
- where the shaped support body (10) is porous and/or has recesses (13).

28. Reflector according to Claim 27, characterized in that the support structure (10) comprises CFC or CMC material.

29. Use of a reflector according to either Claim 27 or 28 in a satellite and/or in moving reflection or mirror systems and/or as mirror for light in the IR-UV region and/or as antenna reflector and/or as reflector for generating solar energy.

## Revendications

1. Procédé pour la fabrication de réflecteurs, de miroirs ou de corps servant à réfléchir des ondes électromagnétiques, dans lequel
- on applique sur au moins une surface d'un corps moulé-support une couche externe dont la surface réfléchit les ondes magnétiques dans une direction définie,
- le corps moulé-support est fabriqué dans un matériau poreux, résistant aux températures élevées, en tant que structure porteuse sur laquelle, afin de former la couche externe réfléchissante ou miroitante, on applique au moins une couche de silicium métallique, soit sous forme de poudre Si, de tranche de Si, de corps moulé de silicium, soit une combinaison de ce qui précède, et
- procédé dans lequel le corps moulé-support est passé avec le côté opposé à la couche externe dans un bain de silicium dopé fondant donc plus bas, de telle sorte que le silicium dopé monte de niveau sous l'action des forces capillaires du corps moulé-support, jusqu'à la poudre Si, la tranche de Si, le corps moulé Si ou la combinaison de ceux-ci et que ce silicium se combine à celui-ci.

2. Procédé selon la revendication 1, caractérisé en ce qu'on fabrique le corps moulé en matériau composite CFC ou en matériau CMC.

3. Procédé selon l'une des revendications précédentes, caractérisé en ce qu'on combine le silicium métallique avec la surface du support dans une atmosphère gazeuse protectrice ou dans le vide.

4. Procédé selon l'une des revendications précédentes, caractérisé en ce qu'on traite le silicium métallique et la surface du support à une température supérieure à 800° C, de préférence à une température située entre 1 300° C et 1 600° C et de préférence tout particulièrement à une température située entre 1 350° C et 1 450° C.

5. Procédé selon l'une des revendications précédentes, caractérisé en ce qu'on colle le silicium métallique sur la surface de support avant la combinaison avec le corps moulé-support, collage s'effectuant de préférence au moyen d'une colle qui favorise les phénomènes de diffusion, de frittage ou de fusion et qui s'effectue de préférence au moyen d'un agent liant en résine ou d'une colle à base de carbone, de silicium ou de carbure de silicium, ou de précurseurs à base de polysilane ou de carbonitrite de silicium ou de silicones.

6. Procédé selon l'une des revendications précédentes pour du silicium métallique sous forme de tranches de silicium, caractérisé en ce qu'afin de produire des surfaces plus grandes, celles-ci sont recouvertes de tranches de silicium telles que la surface du support soit recouverte essentiellement sans interstices.

7. Procédé selon l'une des revendications précédentes, caractérisé en ce que l'on applique le silicium métallique en plusieurs couches, ces couches étant en silicium métallique de dopages, de préférence différents, voire d'un degré d'impureté différent, la couche la plus immédiate appliquée sur la surface du support étant de préférence le silicium ayant le dopage le plus élevé, voir le plus haut degré d'impureté, et, en particulier si la surface est composée de plusieurs surfaces partielles, la couche la plus supérieure étant éventuellement une autre couche de silicium d'une pureté particulièrement élevée.

8. Procédé selon la revendication 1, caractérisé en ce qu'on fabrique une structure de support qui, comme corps moulé-support, soit assemblé ou jointé en plusieurs éléments partiels, et que ceux-ci soient consolidés en une structure globale par la montée du silicium.

9. Procédé selon la revendication 1, caractérisé en ce qu'on fabrique les corps moulés-supports en matériau carbonique, voire en matériau carboné et ensuite carbonate, voire en matériau graphite.

10. Procédé selon l'une des revendications précédentes, caractérisé en ce qu'on aplanit et que, tout particulièrement, on ponce la surface de support avant l'application du silicium métallique.

11. Procédé selon l'une des revendications précédentes, caractérisé en ce qu'on fabrique le corps moulé-support avec plusieurs corps moulés reliés entre eux.

12. Procédé selon l'une des revendications précédentes, caractérisé en ce qu'on prévoit des creux dans le corps moulé-support.

13. Procédé selon l'une des revendications précédentes, caractérisé en ce qu'on introduit dans le corps moulé-support du carbone pyrolytique, de préférence par dépôt chimique en phase vapeur.

14. Procédé selon la revendication 2, caractérisé en ce qu'on fabrique le corps moulé-support de façon à ce qu'il présente une proportion de silicium métallique non transformé de 5-50 de pourcentage en poids.

15. Procédé selon l'une des revendications précédentes, caractérisé en ce qu'on dépose du carbone, voire aplanit ou polit la surface miroitante, ce dépôt de carbone s'effectuant dans une atmosphère carbonée, en particulier une atmosphère contenant des hydrocarbures comme le propane ou le méthane, ceci à une température élevée, de préférence au-dessus de 700° C.

16. Procédé selon l'une des revendications précédentes, caractérisé en ce que le corps moulé de silicium est fixé au corps moulé-support avec une fritte de verre favorisant le processus de fusion.

17. Procédé selon l'une des revendications précédentes, caractérisé en ce qu'on utilise, pour fabriquer des surfaces réfléchissantes sur des structures moulées, aussi bien des corps moulés de silicium métalliques, que des tranches de silicium, de la poudre de silicium ou une combinaison de ces formes.

18. Procédé selon l'une des revendications précédentes, caractérisé en ce que les corps moulés de silicium sont oxydés sur leur surface en dioxyde de silicium (SiO₂) ou en quartz, grâce à une exposition à une atmosphère oxygénée, de préférence à de l'air, à des températures supérieures à 500° C.

19. Procédé selon la revendication 1, caractérisé en ce qu'on enduit le silicium métallique, avant de le faire fondre sur la structure de support, sur la surface de fusion d'un métal non ferreux qui forme avec le silicium un eutectique de fusion, de préférence avec de l'or, et que l'on produit l'eutectique de fusion par traitement thermique de préférence de 300° C jusqu'à 600° C.

20. Procédé selon la revendication 19, caractérisé en ce que le métal non ferreux est appliqué soit sur une surface de fusion du silicium métallique, soit sur celle de la structure de support, soit entre les deux.

21. Procédé selon l'une des revendications 19 ou 20, caractérisé en ce que la fusion du silicium métallique revêtant la structure de support se produit dans une marge de température située entre 300° C et 600° C.

22. Procédé selon l'une des revendications 19 à 21, caractérisé en ce que la fusion du silicium métallique revêtu d'or se produit en atmosphère normale.

23. Procédé selon la revendication 19, caractérisé en ce que l'eutectique de fusion du silicium métallique est réalisé avec le métal non ferreux lors d'un processus thermique séparé, indépendant du processus de fusion sur la structure de support.

24. Procédé selon la revendication 19, caractérisé en ce que l'eutectique de fusion est réalisé en un seul processus thermique, en même temps que la fusion sur la structure de support, uniquement avec le métal non ferreux (2).

25. Procédé selon la revendication 19, caractérisé en ce que, pour des métaux non ferreux, qui forment une couche oxydée, les processus de formation d'eutectique et de fusion sont réalisés dans le vide ou dans un gaz protecteur.

26. Procédé selon la revendication 19, caractérisé en ce que le revêtement du silicium métallique avec de l'or est effectué soit avec des feuilles d'or, soit par dépôt chimique en phase vapeur, c'est-à-dire par pulvérisation.

27. Réflecteur ayant corps moulé-support (10) et couche externe (11) comportant une surface réfléchissante (12), caractérisé en ce que la couche externe (11) consiste en silicium métallique et est fixée solidement au corps moulé-support (10),
- le corps moulé-support (10) et/ou la couche externe (11) étant composés de plusieurs pièces et les pièces étant reliées solidement les unes aux autres, de préférence pour former des corps d'une seule pièce, et
- le corps moulé-support (10) étant poreux et/ou comportant des creux (13).

28. Réflecteur selon la revendication 27, caractérisé en ce que la structure de support (10) consiste en matériau CFC ou CMC.

29. Utilisation d'un réflecteur selon l'une des revendications 27 ou 28, dans des satellites et/ou dans des systèmes mobiles de réflexion ou de miroitement et/ou servant de miroir à la lumière dans le spectre IR-UV ou de réflecteur-antenne et/ou de réflecteur pour recueillir de l'énergie solaire.
